# EUROPÄISCHE PATENTANMELDUNG

(11) **EP 1 118 811 A2**
(43) Veröffentlichungstag der Anmeldung: **25.07.2001**
(21) Anmeldenummer: 01101218.4
(22) Anmeldetag: 19.01.2001
(51) Int. Cl.: F16L 25/00

(54) **Flexibles Leitungselement mit einer an mindestens einem Ende angebrachten Anschlussvorrichtung**

(30) Priorität: 19.01.2000 DE 20000888 U; 08.03.2000 DE 20004316 U; 26.09.2000 EP 00120910
(71) Anmelder: Witzenmann GmbH Metallschlauch-Fabrik Pforzheim, 75175 Pforzheim (DE)
(72) Erfinder: Baumann, Roland, 89081 Ulm (DE); Dörge, Franz, 75210 Keltern-3-Weiler (DE); Michelfelder, Bernd, Dr., 76131 Karlsruhe (DE); Schüttler, Peter, 75223 Niefer-Öschelbronn (DE); Seeger, Bernd, 75181 Pforzheim (DE); Mader, Manfred, 2432 Schwadorf (AT)
(74) Vertreter: Kaiser, Magnus, Dipl.-Phys.

(57) **Zusammenfassung**

Es wird ein flexibles Leitungselement vorgeschlagen, das aus einem ringgewellten Schlauch oder einem ringgewellten Rohr besteht und mit einer Anschlussvorrichtung versehen ist, wobei die Anschlussvorrichtung 6 ein auf das Ende des flexiblen Leitungselements 1 aufgesetztes und dieses umgreifendes Anschlussstück 2 mit einem Außengewinde 5, eine auf das flexible Leitungselement 1 aufgeschobene und auf das Außengewinde 5 des Anschlussstücks 2 aufschraubbare Überwurfmutter 3 sowie einen auf das flexible Leitungselement 1 aufgeschobenen, zwischen dem Anschlussstück 2 und der Überwurfmutter 3 angeordneten, von diesem verformbaren Klemmring 4 umfasst.

## Beschreibung

Die Erfindung betrifft ein flexibles Leitungselement mit einer an mindestens einem Ende angebrachten Anschlussvorrichtung, wobei das flexible Leitungselement aus einem ringgewellten Schlauch oder einem ringgewellten Rohr besteht.

Ringwellschläuche bzw. Ringwellrohre bestehen aus einer Aneinanderreihung von ringförmig geschlossenen, parallelen Einzelwellen und bieten hierdurch die Möglichkeit, das hieraus bestehende Leitungselement bis auf einen Mindestradius elastisch zu biegen. Da sie dennoch gas- bzw. flüssigkeitsdicht sein können, eignen sie sich hervorragend für die flexible Verlegung von Fluidleitungen oder für den Ausgleich von Schwingungen und Wärmedehnungen. Problematisch ist dabei jedoch der Anschluss solcher Leitungselemente, der in aller Regel gas- bzw. flüssigkeitsdicht erfolgen muss. Aufgrund der wellenförmigen Wandung sind daher spezielle Anschlusstechniken notwendig.

Herkömmliche Anschlusstechniken, die eine Armatur an einen Ringwellschlauch oder ein Ringwellrohr fluiddicht anbinden, erfordern besondere Sachkenntnis und Spezialwerkzeug bei der Montage: So gibt es beispielsweise Schweißarmaturen, bei denen eine Hülse über das anzuschließende Ende des Wellschlauchs oder Wellrohrs gesteckt und mit diesem rundum verschweißt wird. Alternativ hierzu gibt es auch Lötarmaturen, die durch Löten mit dem Wellrohr oder dem Wellschlauch verbunden werden. Eine dritte Fügetechnik verformt das Schlauchende bzw. Rohrende derart, dass die letzten zwei bis drei Wellen axial zusammengeschoben werden und hierdurch einen Flansch bilden, an den dann eine speziell ausgebildete Armatur durch Verschrauben angeflanscht werden kann.

Die herkömmlichen Anschlusstechniken für Ringwellrohre bzw. Ringwellschläuche erfordern also Werkzeuge und Fachkenntnisse vor Ort, aufgrund denen der Einsatz solcher flexibler Leitungselemente auf Fachbetriebe beschränkt ist. Wünschenswert wäre jedoch eine einfache Anschlusstechnik, die auch von einem Heimwerker beherrschbar wäre.

Der Erfindung liegt daher die Aufgabe zugrunde, ein flexibles Leitungselement mit Anschlussvorrichtung der eingangs genannten Art zur Verfügung zu stellen, die einen einfachen, schnellen und dennoch fachgerechten Anschluss vor Ort ermöglicht.

Gelöst ist diese Aufgabe durch ein flexibles Leitungselement und eine zugehörige Anschlussvorrichtung mit den Merkmalen der beigefügten Patentansprüche 1 und 8.

Vorteilhafte Ausgestaltungen der Erfindung finden sich in den jeweils nachfolgenden Patentansprüchen.

Die Anschlussvorrichtung, die an mindestens einem Ende des als ringgewelltem Schlauch oder ringgewelltem Rohr ausgebildeten flexiblen Leitungselements angebracht ist, umfasst erfindungsgemäß also ein auf das Ende des flexiblen Leitungselements aufgesetztes und dieses umgreifendes Anschlussstück mit einem Außengewinde, eine auf das flexible Leitungselement aufgeschobene und auf das Außengewinde des Anschlussstücks aufschraubbare Überwurfmutter sowie einen auf das flexible Leitungselement aufgeschobenen, zwischen dem Anschlussstück und der Überwurfmutter angeordneten, von diesen verformbaren Klemmring.

Ein solcher Klemmring und die diesen verformenden Teile sind von herkömmlichen Klemmringverschraubungen bei zylindrischen Rohren an sich bekannt. Erfindungsgemäß ist jedoch überraschend erkannt worden, dass eine fluiddichte Klemmringverschraubung mit entsprechender Dimensionierung der beteiligten Teile auch bei Ringwellrohren und Ringwellschläuchen möglich ist. Hierdurch ergibt sich eine größtmögliche Flexibilität bei der Montage solcher flexiblen Leitungselemente: Die Leitungselemente können vor Ort auf jede beliebige Länge gekürzt werden; eine Armatur kann dann mit Hilfe der erfindungsgemäßen Anschlussvorrichtung mit einfachsten Hilfsmitteln, nämlich einem Maulschlüssel oder einer entsprechenden Zange hergestellt werden: Es müssen lediglich die Überwurfmutter und der Klemmring auf das Wellrohr oder den Wellschlauch aufgeschoben und das Anschlussstück aufgesteckt werden, um sodann durch Aufschrauben der Überwurfmutter auf das Anschlussstück den klemmenden Sitz der Armatur herzustellen. Eine Verformung des Rohrendes bzw. Schlauchendes oder ein Anbinden der Armatur mittels Schweißen oder Löten kann also vollständig entfallen.

Je nach Material des verwendeten Wellrohrs oder Wellschlauchs - vorzugsweise wird hier Metall, insbesondere ein nicht rostender, austenitischer Edelstahl verwendet -, können für den Klemmring unterschiedliche Materialien eingesetzt werden, wie beispielsweise Messing, Edelstahl oder Kunststoff. Das Profil des Klemmrings kann, wie in der Verbindungstechnik für zylindrische Rohre üblich, konvex gebogen ausgebildet sein; jedoch kann es auch Vorteile bieten, den Klemmring mit einem trapezförmigen Profil zu versehen, so dass sich mehr Verformungsmaterial ergibt, das bei der Verformung zum Teil in die Wellentäler fließt. Aus demselben Grund kann es je nach Dimensionierung der Anschlussvorrichtung sinnvoll sein, ein im wesentlichen rechteckiges oder ein im wesentlichen rundes Profil für den Klemmring vorzusehen.

In all diesen Fällen ist es vorteilhaft, wenn das Anschlussstück und die Überwurfmutter der erfindungsgemäßen Anschlussvorrichtung jeweils einen Konus aufweisen, der zur Verformung des Klemmrings in Kontakt mit diesem kommt und ihn infolge dessen radial nach innen verformt, um die Klemmung herzustellen.

Da sich der Klemmring im allgemeinen so verformen wird, dass sich seine Ränder schneller zur Achse des Rohres hin bewegen, als der Rest des Materials, wird es in aller Regel zweckmäßig sein, wenn der Klemmring so breit ausgebildet ist, dass er mindestens zwei Wellenberge überdeckt; es könnte sonst die Gefahr bestehen, dass sich der Klemmring um einen einzigen Wellenberg herum wölbt und eine Fluiddichtheit die Verbindung daher nicht mehr gewährleistet wäre.

Im gleichen Zusammenhang ist es vorteilhaft, wenn der Klemmring so auf das flexible Leitungselement aufgeschoben wird, dass seine Ränder jeweils zwischen zwei Wellenbergen angeordnet sind. Ist der Klemmring darüber hinaus so ausgebildet, dass sich seine Ränder beim Aufschrauben der Überwurfmutter auf das Anschlussstück in die Wellentäler hinein verformen, wird zum einen die axiale Auszugssicherung verbessert und zum anderen können sich die Ränder des Klemmrings entlang des Wellenradius bis in die Wellenflanke hinein an den Wellenberg anschmiegen und so eine zuverlässige, umlaufende Dichtung gewährleisten. Hierzu muss dann noch nicht einmal eine definierte Verformung des Klemmrings erfolgen, da es unerheblich ist, an welcher Stelle des Krümmungsradius des Wellenbergs die Klemmung und damit die Dichtung erfolgt.

Besondere Vorteile ergeben sich hierbei, wenn der verwendete Klemmring abgeflachte und/oder mit einer Sollbiegestelle, insbesondere einer Einschnürung versehene Ränder aufweist. Das Verformen der Ränder in die Wellentäler hinein und das Anschmiegen an die jeweiligen Wellenflanken wird hierdurch forciert. Die Einschnürungen können dabei auf der radial außen liegenden Seite des Klemmrings vorgesehen sein; jedoch ist es auch möglich, anstatt oder zusätzlich zu diesen Einschnürungen weitere Einschnürungen oder Einkerbungen auf der radial innen liegenden Seite des Klemmrings vorzusehen. Solche innen liegenden Einschnürungen oder Einkerbungen können dem Außenprofil des Wellrohrs oder Wellschlauchs derart angepaßt sein, dass sie bei der Montage eine genaue Ausrichtung des Klemmrings - beispielsweise um exakt zwei Wellen zu überdecken - ermöglichen und spätestens während der Verformung des Klemmrings ein selbsttätiges Justieren seiner axialen Lage sicherstellen.

Weitere Vorteile können dadurch erzielt werden, wenn der verwendete Klemmring an der radial innen liegenden Seite seines Profils eine etwa mittig angeordnete Ausnehmung oder Einkerbung aufweist: Dies unterstützt seine Verformbarkeit in axialer Richtung und lenkt die Verformung in die Wellentäler. Ein so ausgebildeter Klemmring kann darüberhinaus so auf dem Wellrohr oder Wellschlauch angeordnet werden, dass er lediglich einen Wellenberg axial überdeckt. Dieser Wellenberg wird dann während der Verformung in die vorzugsweise entsprechend angepaßte Ausnehmung an der Innenseite des Klemmrings gepreßt, während sich dessen Material an die Wellenflanken anschmiegt.

Es liegt auf der Hand, dass die Verwendung von Klemmringen mit Sollbiegestellen oder innen liegenden Ausnehmungen ermöglicht, einen fluiddichten Anschluss schon dann herzustellen, wenn der Klemmring nur einen einzigen Wellenberg axial überdeckt.

Einige Ausführungsbeispiele der Erfindung werden im Folgenden anhand der beigefügten Zeichnungen näher beschrieben und erläutert. Es zeigen:
- Figur 1: einen Schnitt durch ein erfindungsgemäßes Leitungselement mit Anschlussvorrichtung;
- Figur 2: eine teilgeschnittene Ansicht einer anderen Ausführungsform eines erfindungsgemäßen Leitungselements mit Anschlussvorrichtung;
- Figur 3: eine Ansicht gemäß Figur 2 einer anderen Ausführungsform;
- Figur 4: eine Ansicht gemäß Figur 2 einer weiteren Ausführungsform;
- Figur 5: eine schematische Schnittdarstellung eines Leitungselements mit aufgeschobenem Klemmring;
- Figur 6: eine Darstellung wie Figur 5, jedoch einer anderen Ausführungsform;
- Figur 7: eine Darstellung wie Figur 5, jedoch einer weiteren Ausführungsform;
- Figur 8: eine Darstellung wie Figur 5 mit einer weiteren Ausführungsform;
- Figur 9: eine schematische Schnittdarstellung einer weiteren Ausführungsform eines erfindungsgemäßen Leitungselements mit Anschlussvorrichtung.

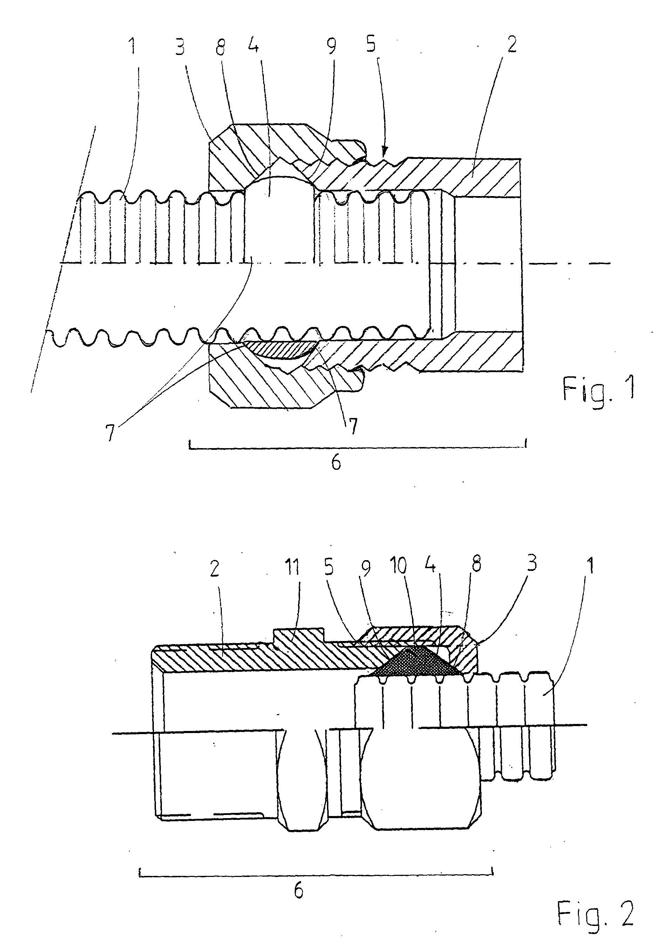

In Figur 1 ist ein flexibles Leitungselement 1, das hier als ringgewellter Metallschlauch ausgebildet ist, in ein Anschlussstück 2 eingesteckt. Vor dem Einstecken des flexiblen Leitungselements 1 in das Anschlussstück 2 wurden eine Überwurfmutter 3 und ein Klemmring 4 auf den Wellschlauch aufgeschoben. Der Klemmring 4 liegt dabei zwischen der Überwurfmutter 3 und dem Anschlussstück 2. Das Anschlussstück 2 ist schlauchseitig mit einem Außengewinde 5 versehen, auf welches die Überwurfmutter 3 aufgeschraubt werden kann.

Figur 1 zeigt eine zur Montage bereite Anordnung der aus dem Anschlussstück 2, der Überwurfmutter 3 und dem Klemmring 4 bestehenden Anschlussvorrichtung 6: Der Klemmring 4 liegt mit seinen Rändern 7 einerseits an einem Konus 8 der Überwurfmutter 3 und andererseits an einem Konus 9 des Anschlussstücks 2 an. Wird nun die Überwurfmutter 3 weiter auf das Außengewinde 5 des Anschlussstücks 2 aufgeschraubt, wird der Klemmring 4 von seinen Rändern 7 ausgehend verformt und hierdurch radial an den Wellschlauch angepresst, wodurch sich sowohl eine axiale Auszugssicherung als auch eine fluiddichte Abdichtung der Anschlussvorrichtung 6 ergibt. Das Anschlussstück 2, das hier nur verkürzt dargestellt ist, kann an seinem anschlussseitigen Ende beispielsweise mit einem Flansch, einem weiteren Gewinde oder einer spiegelbildlichen Anschlussvorrichtung zum Verbinden zweier flexibler Leitungselemente versehen sein.

Figur 2 zeigt eine ähnliche teilgeschnittene Darstellung wie Figur 1, jedoch einer anderen Ausführungsform: Das flexible Leitungselement 1 ist wiederum ein ringgewellter Metallschlauch, wobei das Anschlussstück 2 hier als Rohranschluss ausgebildet ist. Der Hauptunterschied zum in Figur 1 dargestellten Ausführungsbeispiel liegt in der Profilierung des Klemmrings 4, der hier ein trapezförmiges Profil zeigt. Der Konus 8 der Überwurfmutter 3 und der Konus 9 des Anschlussstücks 2 sind den angeschrägten Randflächen des Klemmrings 4 entsprechend ausgebildet, wobei sich noch dadurch eine Besonderheit ergibt, dass der Rücken 10 des Klemmrings 4 bis an die Innenwandung der Überwurfmutter 3 heranreicht.

Durch die teilgeschnittene Darstellung der Figur 2 wird schließlich deutlich, dass zwei Maulschlüssel oder Wasserpumpenzangen oder dergleichen, die an der Überwurfmutter 3 und an einem Sechskant 11 am Anschlussstück 2 angesetzt werden, zur Montage der erfindungsgemäßen Anschlussvorrichtung 6 vollkommen ausreichen. Spezialwerkzeuge oder irgendwelche Spezialkenntnisse sind hierfür nicht erforderlich.

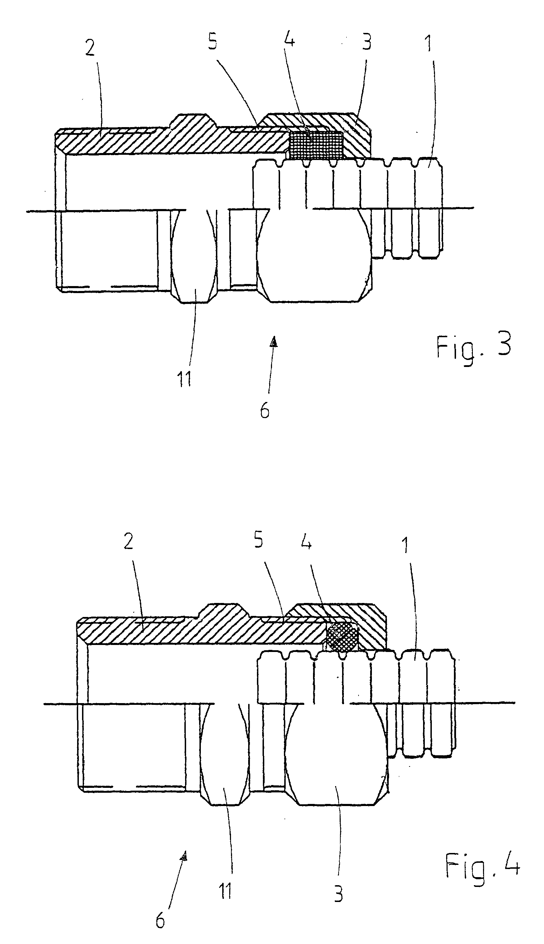

Figur 3 zeigt eine Darstellung wie Figur 2, wobei hier ein Klemmring 4 mit einem völlig anderen Profil, nämlich einem rechteckigen Profil, zum Einsatz kommt. Dementsprechend sind die Überwurfmutter 3 und das Anschlussstück 2 nicht mit einem Konus versehen. Im übrigen darf auf die Beschreibung der Figur 2 verwiesen werden.

Figur 4 zeigt ein nahezu identisches Ausführungsbeispiel wie Figur 3, allerdings ist hier ein Klemmring 4 mit rundem Querschnitt, also in der Art einer O-Ring-Dichtung vorgesehen. Wie hier gut zu erkennen ist, wird von diesem Klemmring 4 nur ein Wellental überdeckt, in das das Material des Klemmrings 4 beim Verformen durch Aufschrauben der Überwurfmutter 3 hineinfließen kann.

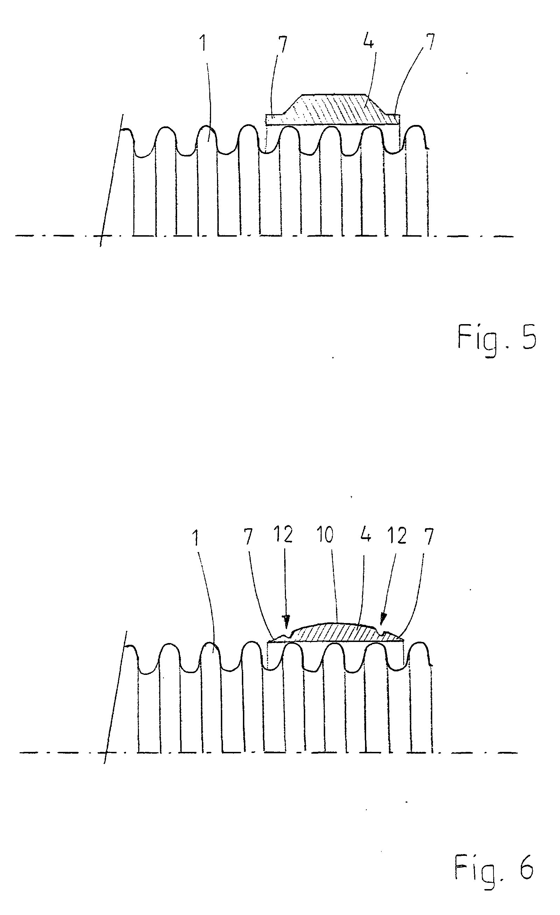

Die Figuren 5 und 6 zeigen in jeweils einer schematischen Darstellung weitere Ausführungsbeispiele für vorteilhafte Profilierungen des erfindungsgemäß in der Anschlussvorrichtung 6 vorhandenen Klemmrings 4: Während Figur 5 einen Klemmring 4 mit abgeflachten, gestreckten Rändern 7 zeigt, sind der Rücken 10 des Klemmrings 4 in Figur 6 mit einem konvexen Profil und die Ränder 7 mit jeweils einer Einschnürung 12 versehen, welche eine Art Sollbiegestelle bildet. In beiden Fällen wird der Klemmring 4 zweckmäßigerweise mit einem Anschlussstück 2 und einer Überwurfmutter 3 eingesetzt, die beide mit einem Konus 8 bzw. 9 versehen sind.

Wie in den Figuren 5 und 6 dargestellt, sollten die Ränder 7 des Klemmrings 4 für die Montage über jeweils einem Wellental des flexiblen Leitungselements 1 zu liegen kommen, so dass sie bei der Verformung in diese Wellentäler hinein verformt werden und sich dichtend an die jeweiligen Wellenflanken anlegen. An welcher Stelle von deren Außenradius die dichtende Auflage letztlich erfolgt, ist unerheblich. Darüber hinaus leuchtet unmittelbar ein, dass eine solche Verformung der Ränder 7 der Klemmringe 4 eine hervorragende axiale Auszugssicherheit bietet.

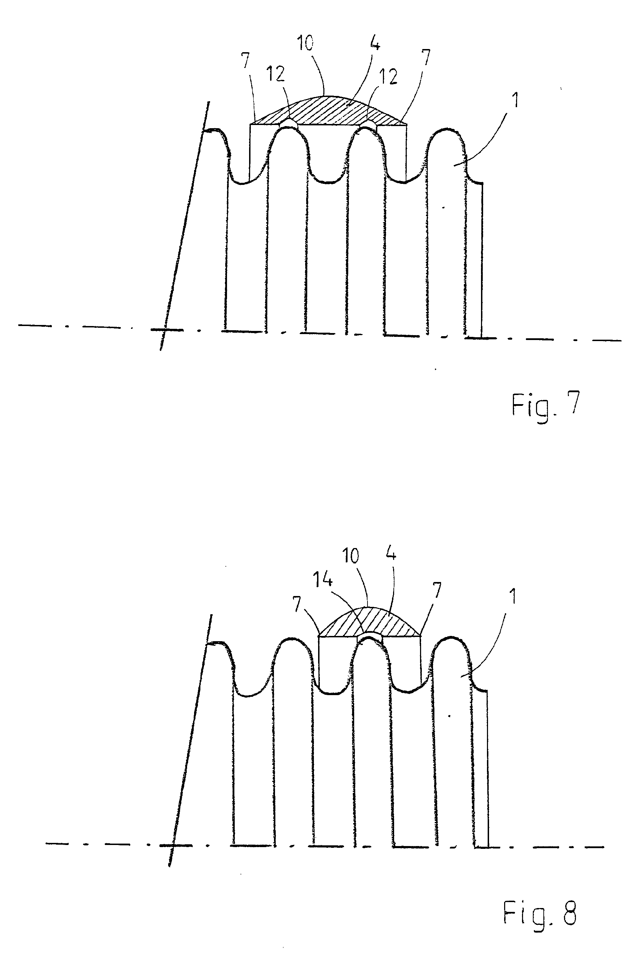

In Figur 7 ist in einer den Figuren 5 und 6 entsprechenden Darstellung eine weitere Ausführungsform eines Klemmrings 4 dargestellt: Hier sind die Einschnürungen 12 an den Rändern 7 des Klemmrings 4 nicht wie im vorhergehenden Ausführungsbeispiel am Rücken 10 des Klemmrings 4 angebracht, sondern auf der radial innen liegenden Seite des Klemmringprofils. Wie anhand dieser Darstellung deutlich wird, ergibt sich hierdurch der Nebeneffekt, dass die unmittelbar unter den Einschnürungen 12 liegenden Wellenberge bei der Verformung des Klemmrings 4 in diese Einschnürungen 12 hineingedrückt werden, wodurch sich eine selbsttätige, exakte axiale Ausrichtung des Klemmrings 4 auf dem flexiblen Leitungselement 1 ergibt. Sofern die Montage der erfindungsgemäßen Anschlussvorrichtung bei einem mehr oder weniger horizontal verlaufenden flexiblen Leitungselement 1 erfolgt, kann sich der Klemmring 4 nach seinem Aufschieben auf den Wellschlauch aufgrund der Schwerkraft auf der Oberseite des Wellschlauchs so an diesen anlegen, dass die Einschnürungen 12, die vorzugsweise der Wellenform angepaßt sind, sich bereits auf zwei benachbarte Wellenberge auflegen und diese aufnehmen, so dass eine axiale Ausrichtung des Klemmrings 4 wie von selbst erfolgt.

Das in Figur 8 gezeigte Ausführungsbeispiel eines erfindungsgemäß in der Anschlussvorrichtung vorhandenen Klemmrings 4 weist an der radial innen liegenden Seite seines Profils eine etwa mittig angeordnete Einkerbung 14 auf, während sein Rücken 10 konventionell konvex gebogen ist. Die Einkerbung 14 ist wie dargestellt, vorzugsweise der Form der Wellenberge des flexiblen Leitungselements 1 angepaßt und kann bei der Verformung des Klemmrings 4 einen Wellenberg aufnehmen, so dass sich zum einen eine axiale Ausrichtung des Klemmrings 4 ergibt und zum anderen die axiale Überdeckung eines einzigen Wellenbergs ausreicht, um eine fluiddichte Verbindung zu gewährleisten.

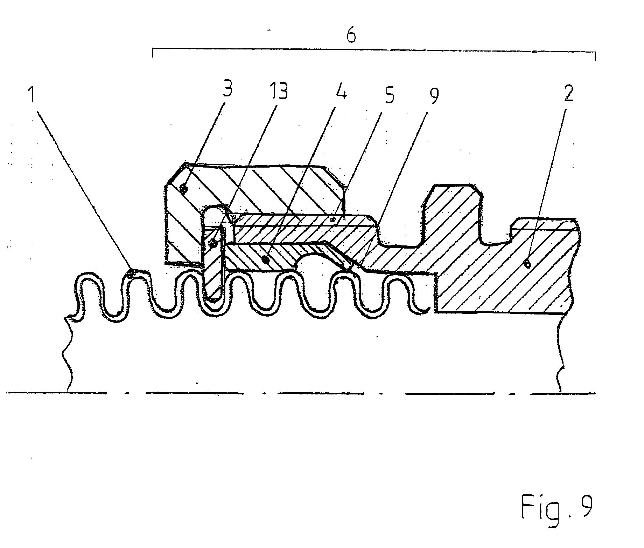

Figur 9 schließlich zeigt ein deutlich anderes Ausführungsbeispiel als die vorhergehenden Figuren , wiederum in einer schematischen Schnittdarstellung: Es ist wiederum ein flexibles Leitungselement 1, das als metallischer Ringwellschlauch ausgebildet ist, zusammen mit einer Anschlussvorrichtung 6 dargestellt, wobei die Anschlussvorrichtung 6 wiederum ein Anschlussstück 2 mit einem Konus 9 und einem Außengewinde 5, eine Überwurfmutter 3 und einem Klemmring 4 umfasst. Zusätzlich ist nun ein Haltering 13 vorgesehen, der geteilt bzw. schließbar ausgebildet ist und auf diese Weise formschlüssig in ein Wellental des flexiblen Leitungselements 1 eingesetzt werden kann. Hierdurch ergibt sich von selbst eine definierte Ausrichtung des Klemmrings 4, der hier bewusst nur die Außenkrempen der einzelnen Wellen kontaktiert, um dort eine klemmende Abdichtung herzustellen. Die Auszugsicherung wird im wesentlichen vom Haltering 13 gewährleistet, der mittels der Überwurfmutter 3 am Anschlussstück 2 festgelegt wird. Darüber hinaus bietet der Haltering 13 hier einen definierten Anschlag am Anschlussstück 2, so dass die Überwurfmutter 3 nicht weiter auf das Außengewinde 5 des Anschlussstücks 2 aufgeschraubt werden kann, als zur definierten Verformung des Klemmrings 4 notwendig ist. Selbstverständlich kann auch bei allen anderen, oben erwähnten Ausführungsformen eines Klemmrings 4 zusätzlich ein Haltering 13 vorgesehen sein.

### Bezugszeichenliste

- 1: flexibles Leitungselement
- 2: Anschlussstück
- 3: Überwurfmutter
- 4: Klemmring
- 5: Außengewinde
- 6: Anschlussvorrichtung
- 7: Ränder (von 4)
- 8: Konus (von 3)
- 9: Konus (von 2)
- 10: Rücken (von 4)
- 11: Sechskant
- 12: Einschnürung
- 13: Haltering
- 14: Einkerbung

## Patentansprüche

1. Flexibles Leitungselement mit einer an mindestens einem Ende angebrachten Anschlussvorrichtung, wobei das flexible Leitungselement aus einem ringgewellten Schlauch oder einem ringgewellten Rohr besteht,
dadurch gekennzeichnet,
dass die Anschlussvorrichtung (6) ein auf das Ende des flexiblen Leitungselements (1) aufgesetztes und dieses umgreifendes Anschlussstück (2) mit einem Außengewinde (5), eine auf das flexible Leitungselement (1) aufgeschobene und auf das Außengewinde (5) des Anschlussstücks (2) aufschraubbare Überwurfmutter (3) sowie einen auf das flexible Leitungselement (1) aufgeschobenen, zwischen dem Anschlussstück (2) und der Überwurfmutter (3) angeordneten, von diesen verformbaren Klemmring (4) umfasst.

2. Flexibles Leitungselement nach Anspruch 1,
dadurch gekennzeichnet,
dass der Klemmring (4) der Anschlussvorrichtung (6) so breit ausgebildet ist, dass er mindestens zwei Wellenberge des flexiblen Leitungsteils (1) überdeckt.

3. Flexibles Leitungselement nach einem der Ansprüche 1 oder 2,
dadurch gekennzeichnet,
dass der Klemmring (4) der Anschlussvorrichtung (6) so auf das flexible Leitungselement (1) aufgeschoben ist, dass seine Ränder (7) jeweils zwischen zwei Wellenbergen des Leitungselements (1) angeordnet sind.

4. Flexibles Leitungselement nach Anspruch 3,
dadurch gekennzeichnet,
dass der Klemmring (4) der Anschlussvorrichtung (6) abgeflachte und/oder mit einer Sollbiegestelle (12) versehen Ränder (7) aufweist.

5. Flexibles Leitungselement nach einem der Ansprüche 3 oder 4,
dadurch gekennzeichnet,
dass der Klemmring (4) der Anschlussvorrichtung (6) so ausgebildet ist, dass sich seine Ränder (7) beim Aufschrauben der Überwurfmutter (3) auf das Anschlussstück (2) in die Wellentäler des Leitungselements (1) hinein verformen.

6. Flexibles Leitungselement nach einem der Ansprüche 1 bis 5,
dadurch gekennzeichnet,
dass das Anschlussstück (2) und die Überwurfmutter (3) der Anschlussvorrichtung (6) jeweils einen Konus (8, 9) für den Kontakt mit dem Klemmring (4) und zu dessen Verformung aufweisen.

7. Flexibles Leitungselement nach einem der Ansprüche 1 bis 5,
dadurch gekennzeichnet,
dass die Anschlussvorrichtung (6) einen axial neben dem Klemmring (4) angeordneten, in ein Wellental des flexiblen Leitungselements (1) eingreifenden Haltering (13) umfasst.

8. Anschlussvorrichtung für ein flexibles Leitungselement nach einem der Ansprüche 1 bis 7, mit einem auf das Ende des flexiblen Leitungselements (1) aufgesetzten und dieses umgreifenden Anschlussstück (2) mit einem Außengewinde (5), einer auf das flexible Leitungselement (1) aufgeschobenen und auf das Außengewinde (5) des Anschlussstücks (2) aufschraubbaren Überwurfmutter (3), sowie einem auf das flexible Leitungselement (1) aufgeschobenen, zwischen dem Anschlussstück (2) und der Überwurfmutter (3) angeordneten, von diesen verformbaren Klemmring (4).

9. Anschlussvorrichtung nach Anspruch 8,
dadurch gekennzeichnet,
dass der Klemmring (5) ein trapezförmiges oder konvex gebogenes Profil aufweist.

10. Anschlussvorrichtung nach Anspruch 8,
dadurch gekennzeichnet,
dass der Klemmring (4) ein im wesentlichen rechteckiges oder ein im wesentlichen rundes Profil aufweist.

11. Anschlussvorrichtung nach einem der Ansprüche 8 bis 10,
dadurch gekennzeichnet,
dass der Klemmring (4) ein Profil mit abgeflachten und/oder mit Einschnürungen (12) versehenen Rändern (7) aufweist.

12. Anschlussvorrichtung nach einem der Ansprüche 8 bis 11,
dadurch gekennzeichnet,
dass der Klemmring (4) an der radial innen liegenden Seite seines Profils eine etwa mittig angeordnete Ausnehmung oder Einkerbung (14) aufweist.

13. Anschlussvorrichtung nach einem der Ansprüche 8 bis 12,
dadurch gekennzeichnet,
dass axial neben dem Klemmring (4) ein zusätzlicher, in ein Wellental des flexiblen Leitungselements (1) eingreifender Haltering (13) vorgesehen ist.
